# EUROPÄISCHE PATENTSCHRIFT

(11) **EP 3 959 115 B1**
(45) Veröffentlichungstag und Bekanntmachung des Hinweises auf die Patenterteilung: **01.05.2024**
(21) Anmeldenummer: 20721192.1
(22) Anmeldetag: 22.04.2020
(51) Int. Cl.: B62D 1/185, F16C 3/035

(54) **LÄNGENVERSTELLBARE LENKWELLE FÜR EIN KRAFTFAHRZEUG UND PROFILHÜLSE FÜR EINE LENKWELLE**
LENGTH-ADJUSTABLE STEERING SHAFT FOR A MOTOR VEHICLE, AND PROFILED SLEEVE FOR A STEERING SHAFT
ARBRE DE DIRECTION RÉGLABLE EN LONGUEUR POUR UN VÉHICULE À MOTEUR ET DOUILLE PROFILÉE POUR UN ARBRE DE DIRECTION

(30) Priorität: 23.04.2019 DE 102019205784
(43) Veröffentlichungstag der Anmeldung: 02.03.2022
(73) Patentinhaber: thyssenkrupp Presta AG, 9492 Eschen (LI); thyssenkrupp AG, 45143 Essen (DE)
(72) Erfinder: JÄGER, Bernhard, 88239 Wangen im Allgäu (DE); BUGL, Michael, 6800 Feldkirch (AT); KLEKLER, Jochen, 9466 Sennwald (CH)
(74) Vertreter: thyssenkrupp Intellectual Property GmbH
(86) Internationale Anmeldenummer: PCT/EP2020/061163
(87) Internationale Veröffentlichungsnummer: WO 2020/216771

(56) Entgegenhaltungen:
- DE-A1-102017 201 709

## Beschreibung

### Stand der Technik

Die Erfindung betrifft eine längenveränderbare Lenkwelle für ein Kraftfahrzeug, umfassend eine hohle Außenwelle mit unrundem Innenquerschnitt, in dem eine Innenwelle drehmomentschlüssig und axial bewegbar aufgenommen ist, wobei zwischen der Innenwelle und der Au-ßenwelle eine Profilhülse angeordnet ist, die einen mit der Innenwelle verbundenen Befestigungsabschnitt aufweist, und die Innenwelle zumindest abschnittweise als Hohlwelle ausgebildet ist, die einen zum in die Außenwelle eintauchenden Ende hin offenen Innenraum aufweist

Um in einem Kraftfahrzeug eine Verstellung der Lenksäule relativ zur Fahrerposition zu ermöglichen, sind teleskopierbare Lenkwellen bekannt, bei denen zumindest ein Wellenabschnitt längenverstellbar ausgestaltet ist, für eine Längenverstellung in Längs- bzw. Axialrichtung. In einer Kraftfahrzeuglenkung kann eine längenverstellbare Lenkwelle die fahrerseitige Lenkspindel bilden oder die Lenkzwischenwelle zwischen der Lenkspindel und dem Lenkgetriebe.

Eine gattungsgemäße Lenkwelle, die beispielsweise in der DE 10 2017 201 709 A1 beschrieben ist, weist eine als Hohlwelle ausgebildete Außenwelle auf, in die eine Innenwelle teleskopartig axial verschiebbar eintaucht. Zur Drehmomentübertragung weist die Innenwelle einen Übertragungsabschnitt mit unrundem Querschnittsprofil auf, beispielsweise einen Verzahnungsabschnitt mit axial erstreckten Zähnen, der drehmomentschlüssig in ein korrespondierendes Innenprofil, beispielsweise eine entsprechende Innenverzahnung der Außenwelle eingreift. Die Innenwelle kann zumindest abschnittweise ebenfalls rohrförmig als Hohlwelle ausgebildet sein, bevorzugt im Bereich des Übertragungsabschnitts, wobei der Innenraum an dem in die Außenwelle eintauchenden Ende eine stirnseitige Öffnung aufweist.

Zur Verringerung der Reibung beim axialen Verstellen und zur Verringerung des Verdrehspiels zwischen der zumeist aus Stahl gefertigten Außen- und Innenwelle, ist aus dem Stand der Technik der Einsatz einer Gleithülse bekannt, die als Profilhülse zumindest teilweise im Bereich des drehmomentübertragenden Übertragungsquerschnitts zwischen Innen- und Au-ßenwelle angeordnet ist. Die Profilhülse ist aus einem auf Stahl gut gleitfähigen Material, bevorzugt einem Kunststoff wie Polypropylen (PP), Polytetrafluorethylen (PTFE) oder dergleichen gefertigt oder damit beschichtet, und umschließt den Überragungsabschnitt zumindest teilweise, und erstreckt sich beispielsweise axial über einen Teil des Verzahnungsabschnitts. Die Fertigung kann als Kunststoff-Spritzgussteil erfolgen, welches auf der Innenwelle fixiert wird, so dass es insbesondere nicht vom freien Ende der Innenwelle abgezogen werden kann.

Zur axialen Fixierung weist die Profilhülse einen Befestigungsabschnitt auf, der mit der Innenwelle verbunden ist. Zur Verbindung wird in der genannten DE 10 2017 201 709 A1 vorgeschlagen, dass mindestens ein Befestigungselement außen auf der Innenwelle angeordnet ist, welches mit einem die Innenwelle außen umgebenden Befestigungsabschnitt verbunden ist. Beispielsweise kann ein von der Innenwelle nach außen vorstehender, die Profilhülse formschlüssig haltender oder axial abstützenden Vorsprung vorgesehen sein, oder eine von außen in die Innenwelle eingebrachte Vertiefung, in welche der Befestigungsabschnitt eingreift.

Um eine leichtgängige axiale Verstellung zu ermöglichen, und gleichzeitig sicherzustellen, dass möglichst kein Verdrehspiel auftritt, müssen bei der Fertigung und Montage der Profilhülse enge Toleranzen eingehalten werden. Dadurch, dass sich bei den bekannten Verbindungen der Befestigungsabschnitt außen auf der Innenwelle und damit zwischen bzw. innerhalb der zur Drehmomentübertragung dienenden Funktionsflächen von Innen- und Außenwelle befindet, können jedoch bereits geringfügige Verformungen oder Toleranzen beim Fixieren der Profilhülse die Reibung beeinflussen, so dass beispielsweise eine nachteilig hohe Verschiebekraft beim Verstellen auftreten kann. Daraus resultiert ein relativ hoher Aufwand bezüglich einer maßgenauen und präzisen Fertigung und Fixierung der Profilhülse.

Angesichts der vorangehend erläuterten Problematik ist es eine Aufgabe der vorliegenden Erfindung, den Herstellungs- und Montageaufwand zu reduzieren.

### Darstellung der Erfindung

Diese Aufgabe wird erfindungsgemäß gelöst durch eine Lenkwelle mit den Merkmalen des Anspruchs 1. Vorteilhafte Weiterbildungen ergeben sich aus den Unteransprüchen.

Bei einer längenveränderbaren Lenkwelle für ein Kraftfahrzeug, umfassend eine hohle Au-ßenwelle mit unrundem Innenquerschnitt, in dem eine Innenwelle drehmomentschlüssig und axial bewegbar aufgenommen ist, wobei zwischen der Innenwelle und der Außenwelle eine Profilhülse angeordnet ist, die einen mit der Innenwelle verbundenen Befestigungsabschnitt aufweist, und die Innenwelle zumindest abschnittweise als Hohlwelle ausgebildet ist, die einen zum in die Außenwelle eintauchenden Ende hin offenen Innenraum aufweist, ist erfindungsgemäß vorgesehen, dass der Befestigungsabschnitt sich von dem Ende in den Innenraum der Innenwelle hinein erstreckt und mit einer Innenfläche des Innenraums verbunden ist.

Unter einem unrunden Innenquerschnitt ist jede beliebige Form zu verstehen, die von einer kreiszylindrischen Form abweicht.

Der Befestigungsabschnitt der Profilhülse ist mit der Innenfläche des Innenraums derart verbunden, dass die Profilhülse zumindest in Richtung der Längsachse der Innenwelle in eine Richtung fixiert ist. Damit ist eine relative Verschiebung der Profilhülse gegenüber der Innenwelle in eine Richtung der Längsrichtung verhindert. Somit kann wirksam verhindert werden, dass die Profilhülse in eine ungewollte Relativposition bezogen auf die Innenwelle gebracht wird, mit anderen Worten wird eine ungewollte Trennung von Profilhülse und Innenwelle verhindert.

Bei der Erfindung ist der Befestigungsabschnitt der Profilhülse mit der hohlen Innenwelle von innen, d.h. in ihrem Innenraum verbunden, und nicht wie im Stand der Technik von außen. Wie im Stand der Technik bekannt weist die Profilhülse einen die Innenwelle außen zumindest abschnittweise umschließenden Lagerbereich auf, der im montierten Zustand in dem drehmomentübertragenden Abschnitt zwischen Innen- und Außenwelle angeordnet ist und die Gleitlagerflächen aufweist. Weiterhin weist die Profilhülse einen mit dem Lagerbereich verbundenen Befestigungsabschnitt auf, der jedoch nicht wie im Stand der Technik außen, d.h. mit der äußeren Mantelfläche oder der Stirnseite der Innenwelle verbunden ist, sondern gemäß der Erfindung im Innenraum mit einer Innenfläche im Innenraum der hohlen Innenwelle verbunden ist, und dort zumindest in axialer Richtung mit der Innenwelle fixiert ist.

Dadurch, dass der Befestigungsabschnitt erfindungsgemäß ins Innere der Innenwelle verlagert ist, ist außen kein zusätzlicher axialer Abschnitt zur Fixierung erforderlich, und entsprechend steht auf der Außenseite der Innenwelle eine größere Länge für den Lagerbereich zur Verfügung. Dadurch kann die Profilhülse sich bei gleicher Länge über einen größeren axialen Lagerbereich erstrecken, bevorzugt über die Verzahnung, oder die Innenwelle kann in sich kürzer gestaltet werden, um ein tieferes Eintauchen in die Außenwelle zu ermöglichen. Dadurch kann beim axialen Zusammenschieben der Lenkwelle im Crashfall in vorteilhafter Weise der für eine Energieabsorption zur Verfügung gestellte Weg vergrößert werden, ohne die Lagereigenschaften der Profilhülse zu verändern. Jedoch ist einer Energieabsorption in der erfindungsgemäßen Lenkwelle eine fakultative Einrichtung, die nicht wesentlich zur Realisierung der erfindungsgemäßen Lehre ist.

Der Lagerbereich der erfindungsgemäßen Profilhülse umschließt die Innenwelle zumindest abschnittsweise von außen im Bereich des drehmomentübertragenden, unrunden Bereichs, beispielsweise der Verzahnung. Am stirnseitigen Ende ist die Profilhülse bevorzugt über einen Verbindungsabschnitt mit dem Befestigungsabschnitt verbunden, der sich durch die stirnseitige Öffnung zurück in den Innenraum der Innenwelle erstreckt, wo er erfindungsgemäß von innen mit der Innenwelle verbunden ist. Mit anderen Worten umgreift die Profilhülse das offene Ende der Innenwelle derart, dass die Wandung der in diesem Abschnitt rohrförmigen Innenwelle zwischen dem radial innen liegenden Befestigungsabschnitt und dem radial außen liegenden Lagerabschnitt angeordnet ist.

Bevorzugt weist der Lagerabschnitt einen Querschnitt auf, der mit dem Querschnitt des Bereichs der Innenwelle, auf dem der Lagerabschnitt angeordnet ist, korrespondiert. Bevorzugt ist der Lagerabschnitt rohrförmig ausgebildet und weist ein unrundes Querschnittsprofil auf. Bevorzugt ist der Lagerabschnitt kürzer als die Innenwelle.

Die Innenwelle ist vorzugsweise zumindest abschnittweise rohrförmig ausgebildet, und weist an ihrem in die Außenwelle eintauchenden Ende eine stirnseitige Öffnung zum Innenraum auf. Bevorzugt befindet sich an dem Ende der Übertragungsabschnitt, der bevorzugt als Verzahnungsabschnitt ausgebildet sein kann. Die erfindungsgemäße Profilhülse kann sich dann außen auf der Innenwelle in der einen Richtung bis zu dem Ende des Verzahnungsabschnitts erstrecken, wo sie bevorzugt über einen Verbindungsabschnitt mit einem Befestigungsabschnitt verbunden ist, der in entgegengesetzter Richtung in besagte stirnseitige Öffnung eintaucht und sich in den Innenraum der Innenwelle erstreckt. Mit anderen Worten umgreift die Profilhülse den Rand der stirnseitigen Öffnung und der Befestigungsabschnitt erstreckt sich in den offenen Querschnitt der Profilhülse zurück, derart, dass beim Anbringen auf der Innenwelle die Profilhülse im Bereich des Verzahnungsabschnitts die Innenwelle au-ßen umgibt, und mit ihrem Übertragungsabschnitt durch die endseitige Öffnung in den Innenraum der Innenwelle eintaucht.

Zur Fixierung der Profilhülse können korrespondierende Befestigungsmittel an der Innenwelle und der Profilhülse vorgesehen sein. Die Befestigungsmittel können am Befestigungsabschnitt der Profilhülse angeordnet sein und werden innerhalb der Innenwelle in dem Innenbereich, in dem der Befestigungsabschnitt eintaucht, mit der Innenwand verbunden. Die Innenwand weist hierzu bevorzugt korrespondierende Verbindungselemente auf. Die Verbindungselemente können zur Erzeugung einer form- und/oder kraft- und/oder stoffschlüssigen Verbindung ausgebildet sein. Vorteilhaft ist dabei, dass die bezüglich der Innenwelle innen angeordneten Befestigungsmittel räumlich und funktional von dem außen angeordneten Lagerabschnitt getrennt sind und unabhängig von ihrer Funktionsweise mechanisch von dem Lagerbereich der Profilhülse entkoppelt werden können. Eine mögliche Verformung des Befestigungsabschnitts aufgrund von Toleranzen bei der Fertigung und Montage, oder auch bedingt durch Betriebsbedingungen wie Temperaturschwankungen oder dergleichen, hat keinen unmittelbaren mechanischen Einfluss auf den Lagerabschnitt. Daraus resultiert der besondere Vorteil, dass die Verbindung von Innenwelle und Profilhülse keinen unmittelbaren Einfluss mehr auf die Reibung zwischen Innen- und Außenwelle hat, da diese beiden Funktionen räumlich voneinander getrennt sind. Folglich sind größere Toleranzen zulässig, ohne die Funktion zu beeinträchtigen, wodurch wiederum der Fertigungs- und Montageaufwand reduziert werden kann.

Bevorzugt kann der Befestigungsabschnitt eine radiale Außenfläche haben, die mit einer den Innenraum radial begrenzenden Innenfläche verbunden ist. Die radiale Außenfläche befindet sich auf einer äußeren Mantelfläche des Befestigungsabschnitts, und liegt in radialer Richtung einer inneren Mantelfläche der Innenwelle gegenüber. Die radiale Außenfläche und die Innenfläche können bevorzugt miteinander korrespondierende Verbindungselemente aufweisen zur Bildung einer Verbindung, die in axialer, aus dem Innenraum hinaus weisender Richtung belastbar ist.

Es kann vorgesehen sein, dass der Befestigungsabschnitt rohrförmig ausgebildet ist. Der Befestigungsabschnitt kann beispielsweise einen Rohrabschnitt aufweisen, der stirnseitig über mindestens einen Verbindungsabschnitt mit dem die Innenwelle außen umgebenden Lagerabschnitt der Profilhülse verbunden ist. Der Rohrabschnitt kann einen Rohrstutzen aufweisen, oder auch mehrere einzelne, in Umfangsrichtung geteilte Rohrsegmente aufweisen kann. Der Befestigungsabschnitt erstreckt sich vom offenen Ende her in den offenen Querschnitt der Profilhülse zurück, wobei dazwischen ein Ringraum gebildet wird, in den das Ende der Innenwelle zur Montage eingeführt werden kann. Dabei taucht der Befestigungsabschnitt durch die stirnseitige Öffnung axial in den Innenraum ein, und der Lagerabschnitt umgibt einen Außenabschnitt. Der Befestigungsabschnitt der Profilhülse umgreift somit das stirnseitige Ende der Innenwelle kragenartig.

Der Querschnitt des Befestigungsabschnitts kann an den Innenquerschnitt der Innenwelle angepasst sein, dass beim Einsetzen eine drehschlüssige Verbindung erzeugt wird, beispielsweise durch einen unrunden Querschnitt oder in Umfangsrichtung wirksame ineinander eingreifende Formschlusselemente.

Es kann vorteilhaft sein, dass an der Innenfläche und an dem Befestigungsabschnitt miteinander korrespondierende, miteinander verbindbare Verbindungselemente angeordnet sind. Die Innenwelle kann an der radialen Innenfläche ein oder mehrere Verbindungselemente aufweisen, die mit einem oder mehreren korrespondierenden Gegenverbindungselementen an dem Befestigungsabschnitt in Verbindungseingriff kommen. Diese Verbindungselemente sind bevorzugt regelmässig in Umfangsrichtung verteilt angeordnet.

Es kann vorgesehen sein, dass an der Innenwelle mindestens ein von der Innenfläche radial nach innen in den Innenraum vorstehendes Formschlusselement ausgebildet ist, welches in Formschlusseingriff bringbar ist mit einer Formschlussaufnahme des Befestigungsabschnitts. Die Formschlusselemente der Innenwelle können mindestens einen radial nach innen vorstehenden Vorsprung aufweisen, der in eine korrespondierende Formschlussaufnahme radial eingreift, die beispielsweise als Ausnehmung, Vertiefung oder radiale Öffnung in dem Befestigungsabschnitt ausgebildet sein kann, oder als Hinterschneidung in axialer und/oder radialer Richtung. Dadurch kann eine in Umfangsrichtung und in axialer Richtung wirksame Formschlussverbindung der Profilhülse mit der Innenwelle erzeugt werden, die als Auszugsicherung fungiert und verhindert, dass der Befestigungsabschnitt aus der Öffnung der Innenwelle herausgezogen wird. Eine derartige Ausbildung kann mit geringem Aufwand erfolgen, und die es kann eine sichere und haltbare Verbindung bei kompakter Bauform realisiert werden.

Prinzipiell ist auch eine umgekehrte Anordnung möglich, bei welcher der Befestigungsabschnitt ein radial nach außen vorstehendes Formschlusselement hat, welches von innen in eine korrespondierende, in der Innenseite ausgebildete Formschlussaufnahme in der Innenwandung der Innenwelle eingreift.

Ein nach innen vorstehender Vorsprung kann bevorzugt durch eine Kaltverformung der Innenwandung des Innenraums erzeugt werden. Beispielsweise kann dies durch eine von der Öffnung her eingebrachte axiale Verstemmung realisiert werden, die rationell gefertigt werden kann und einen radial nach innen vorspringenden Materialaufwurf erzeugt. Die Verstellung kann radial beispielsweise in eine korrespondierende Formschlussaufnahme in dem Befestigungsabschnitt eingreifen, beispielsweise einer Öffnung oder Durchbrechung in einem in die Innenwelle eintauchenden Rohrstutzen.

Eine vorteilhafte Ausführung der Erfindung kann vorsehen, dass der Befestigungsabschnitt becherförmig ausgebildet ist, mit einem in Innenraum von der Stirnseite axial beabstandet angeordneten Becherboden. Von der Stirnseite aus gesehen erstreckt sich der Becher konkav in den Innenraum, so dass der Becherboden mit Abstand zum Ende innerhalb des Lagerabschnitts der Profilhülse angeordnet ist, und sich entsprechend im montierten Zustand im Innenraum der Innenwelle befindet. Durch den ganz oder zumindest teilweise geschlossenen Becherboden, der sich tellerartig über den Querschnitt oder zumindest einen Teilquerschnitt des Innenraums erstreckt, kann eine höhere Stabilität der Profilhülse, und auch der Verbindung mit der Innenwelle erzeugt werden. Beispielsweise kann ein durch eine radiale Öffnung erstreckter Vorsprung in axialer Richtung gegen den Becherboden abgestützt sein. Weiterhin kann durch den Becherboden der Innenraum geschlossen werden.

In einer vorteilhaften Ausführung ist die Profilhülse als Kunststoff-Spritzgussteil aus einem thermoplastischen Polymer gefertigt. Dadurch können gute Gleiteigenschaften realisiert werden, wenn die Innen- und Außenwelle beispielsweise aus Stahl oder aus einer Aluminiumlegierung ausgebildet sind.

Zur Fertigung im Kunststoff-Spritzguss ist es vorteilhaft, dass der Anspritzpunkt - bevorzugt zentral - am Becherboden angeordnet ist. Über den Becherboden kann eine radial umlaufende Fließfront der Kunstoffschmelze gebildet werden, die in axialer Richtung zunächst über den Befestigungsabschnitt und weiter über den Lagerabschnitt der Profilhülse läuft. Dadurch erfolgt eine gleichmäßige axiale Füllung der gesamten Profilhülse, ohne dass durch aufeinandertreffende Fließfronten Bindenähte entstehen.

Ein Verfahren zur Herstellung einer Profilhülse im Kunststoff-Spritzguss, bei dem durch einen Anspritzkanal an einem Anspritzpunkt schmelzflüssige Kunststoffschmelze in einen Formhohlraum einer Spritzgießform eingespritzt wird, der einen axial erstreckten Hohlprofilraum mit einem stirnseitigen Ende aufweist, sieht erfindungsgemäß vor, dass mit Abstand von Ende und mit radialem Abstand innerhalb des Hohlprofilraums ein scheibenförmiger, radial erstreckter Angussraum angeordnet ist, der über mindestens einen axial entgegen der axialen Richtung des Hohlprofils zum Ende gerichtete Formkanal mit einem stirnseitig angeordneten Verbindungsraum verbunden ist, der mit dem Hohlprofilraum verbunden ist, wobei die Polymerschmelze in axialer Richtung zentral in den Angussraum eingespritzt wird, und über die Formkanäle und den Verbindungsraum axial in den Hohlprofilraum eingeleitet wird.

Der Hohlprofilraum dient zur Ausformung des Lagerabschnitts der Profilhülse. Die Profilhülse weist - wie weiter oben beschrieben - einen becherförmigen Befestigungsabschnitt auf, der sich vom Ende her konkav in den offenen Querschnitt des rohrförmigen Lagerabschnitts hinein erstreckt, wobei der scheibenförmige Becherboden Abstand zum Ende hat. Der Becherboden wird in der Spritzgussform durch den besagten scheibenförmigen Angussraum geformt, der einen - bevorzugt zentralen - Anspritzpunkt aufweist. Von dem Angussraum erstreckt sich koaxial zum Ende hin mindestens ein im Querschnitt rohrförmiger Formkanal, oder mehrere über den Umfang verteile Formkanäle, durch den oder die der Befestigungsabschnitt geformt wird. Dieser Formkanal mündet in einen stirnseitigen Verbindungsraum, von dem sich in der Gegenrichtung zurück in Richtung Angussraum ein weiterer rohrförmiger Formhohlraum erstreckt, der den besagten, den Befestigungsabschnitt begrenzenden Formhohlraum koaxial mit radialem Abstand umgibt und in dem der Lagerabschnitt geformt wird.

Eine vorteilhafte Ausführung sieht vor, dass die Kunststoffschmelze vor dem Eintritt in den Hohlprofilraum in dem Angussraum oder/und dem Verbindungsraum aufgestaut wird. Hierzu wird vorgesehen, dass der Angussraum einen größeren Innenquerschnitt aufweist, als der oder die Formkanäle. Dadurch kann sich die Kunststoffschmelze beim Einspritzen zunächst im Angussraum aufstauen, und dann stirnseitig mit einer gleichmäßigen axialen Fließfront in den oder die Formkanäle einströmen, und in den sich daran anschließenden Verbindungsraum, in dem der Verbindungsabschnitt geformt wird. Durch die stirnseitig mit dem Hohlprofilraum verbundenen Formkanäle kann sich dann bevorzugt eine über den Umfang geschlossene Fließfront in axialer Richtung über den gesamten Hohlprofilraum ausbreiten, bis dieser komplett gefüllt ist. Vorteilhaft ist dabei, dass unerwünschte Bindenähte in dem im Hohlprofilraum geformten Lagerabschnitt vermieden werden können.

Bevorzugt ist die Profilhülse für die Lenkwelle gemäß der erfindungsgemäßen Vorrichtung nach dem erfindungsgemäßen Verfahren hergestellt.

### Beschreibung der Zeichnungen

Vorteilhafte Ausführungsformen der Erfindung werden im Folgenden anhand der Zeichnungen näher erläutert. Im Einzelnen zeigen:
- Figur 1: eine erfindungsgemäße Lenkwelle in einer schematischen perspektivischen Ansicht,
- Figur 2: die Lenkwelle aus Figur 1 ausschnittweise in einer auseinander gezogenen Darstellung,
- Figur 3: die Innenwelle der Lenkwelle gemäß Figur 1 und 2 und die Profilhülse in einer auseinander gezogenen Darstellung,
- Figur 4: einen Längsschnitt durch die Innenwelle gemäß Figur 2 und 3 in montiertem Zustand,
- Figur 5: einen Längsschnitt ähnlich Figur 4 in einer zweiten Winkelorientierung,
- Figur 6: einer Spritzgussform zur Herstellung einer erfindungsgemäßen Profilhülse in einer ersten Phase zu Beginn des Spritzvorgangs,
- Figur 7: die Spritzgussform gemäß Figur 6 in einer zweiten Phase des Spritzvorgangs,
- Figur 8: die Spritzgussform gemäß Figur 7 in einer weiteren Phase zum Ende des Spritzvorgangs,
- Figur 9: eine axiale Ansicht einer erfindungsgemäßen Profilhülse,
- Figur 10: ein Längsschnitt durch eine Profilhülse gemäß Figur 9.

### Ausführungsformen der Erfindung

In den verschiedenen Figuren sind gleiche Teile stets mit den gleichen Bezugszeichen versehen und werden daher in der Regel auch jeweils nur einmal benannt bzw. erwähnt.

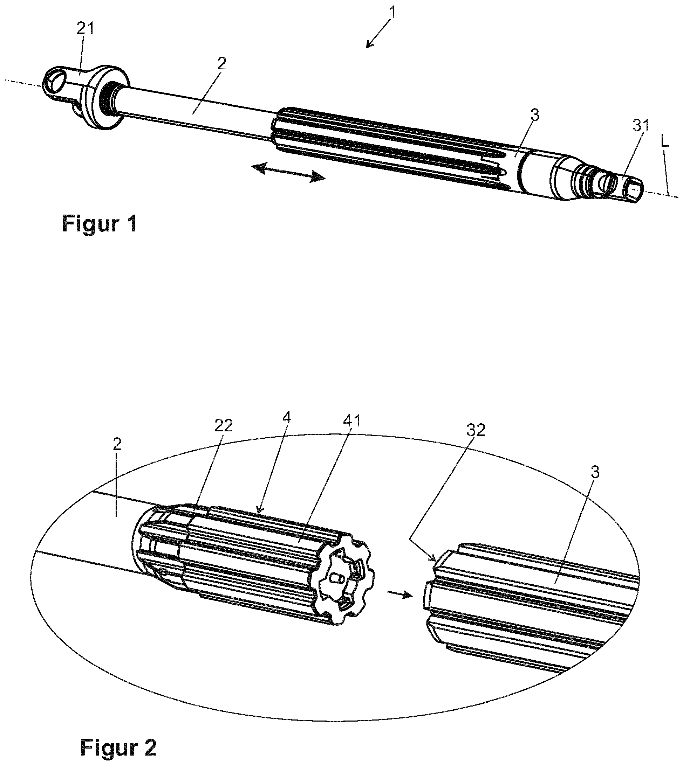

Figur 1 zeigt eine längenverstellbare Lenkwelle 1, die sich entlang einer Achse L (Längsachse) erstreckt und eine Innenwelle 2 und eine Außenwelle 3 aufweist. Die Außenwelle 3 weist an ihrem äußeren, in der Zeichnung rechts liegenden Ende einen Anschlussabschnitt 31 zur drehschlüssigen Verbindung mit einer nicht dargestellten Fahrzeuglenkung auf, beispielsweise mit einer Lenkspindel einer Lenksäule. Beispielsweise kann dazu eine klemmbare Gabel zum Einsatz kommen. Auf ihrem der Innenwelle 2 zugewandten Seite ist die Außenwelle 3 als Hohlwelle ausgebildet, die in ihrer zur Innenwelle 2 hin offenen Öffnung 32 (siehe Figur 2) eine Innenverzahnung mit radial nach innen vorstehenden, in Längsrichtung erstreckten Zähnen aufweist. Die Zähne sind in der Außenwelle 3 durch von außen in die Außenwelle 3 eingebrachte Verformungen gebildet.

Die Innenwelle 2 weist an ihrem der Außenwelle 3 abgewandten, äußeren Ende einen Anschlussabschnitt 21 auf, beispielsweise eine Gabel zur drehschlüssigen Verbindung mit einer weiteren Welle einer nicht dargestellten Fahrzeuglenkung. Die Gabel bildet einen Teil eines nicht dargestellten Universalgelenks.

An ihrem der Außenwelle 3 zugewandten Endbereich weist die Innenwelle 2 einen Verzahnungsabschnitt 22 auf, der eine Außenverzahnung mit in Längsrichtung erstreckten Zähnen aufweist, der in den Figuren 2, 3, 4 und 5 erkennbar ist. Bevorzugt erstreckt sich der Verzahnungsabschnitt 22 über einen Teilbereich der Innenwelle 2. Auf dem Verzahnungsabschnitt 22 ist eine erfindungsgemäße Profilhülse 4 angebracht. Mit einem Lagerabschnitt 41 umschließt die Profilhülse 4 einen endseitigen Bereich des Verzahnungsabschnitts 22 von au-ßen, wobei die Wandung des Lagerabschnitts 41 im Querschnitt der Kontur der Zähne folgt, also korrespondierend zu dem Verzahnungsprofil des Verzahnungsabschnitts 22 ausgebildet ist.

Mit dem Verzahnungsabschnitt 22 und der darauf angebrachten Profilhülse 4 wird die Innenwelle 2 zur Montage in die Öffnung 32 der Außenwelle 3 axial eingesetzt, wie in Figur 2 mit dem Pfeil angedeutet. In eingesetztem Zustand greift der Verzahnungsabschnitt 22 mit der darauf angebrachten Profilhülse 4 drehschlüssig in die Innenverzahnung der Außenwelle 3 ein, wobei sich der Lagerabschnitt 41 zwischen dem Verzahnungsabschnitt 22 und der Innenverzahnung befindet. Dadurch sind die Innenwelle 2 und die Außenwelle 3 zur Übertragung von Drehmoment drehschlüssig, aber zum Längenausgleich zwischen den Anschlussabschnitten 21 und 31 axial bewegbar, wie in Figur 1 mit dem Doppelpfeil angedeutet.

Die Innenwelle 2 und die Außenwelle 3 sind üblicherweise aus Stahl gefertigt, und die Profilhülse 4 aus einem Kunststoff, bevorzugt aus einem thermoplastischen Polymer im Spritzgussverfahren, so dass durch den Lagerabschnitt 41 eine leichtgängige Gleitlagerung der Verstellung in Längsrichtung erzeugt wird. Es ist aber auch denkbar und möglich, die Innenwelle 2 und/oder die Außenwelle 3 aus einer Aluminiumlegierung herzustellen.

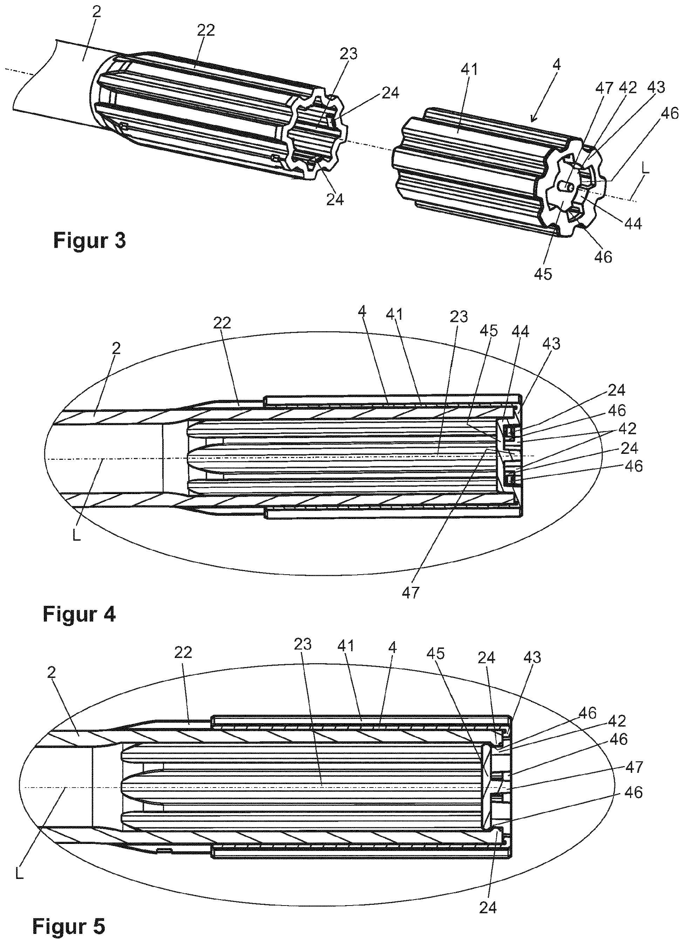

Figur 3 zeigt die Profilhülse 4 von der Innenwelle 2 separiert. Figuren 4 und 5 zeigen den Verzahnungsabschnitt 22 mit der darauf festgelegten Profilhülse 4 in unterschiedlichen Orientierungen bezüglich der Achse L.

Die Innenwelle 2 ist im Bereich des Verzahnungsabschnitts 22 als Hohlwelle ausgebildet, mit einem endseitig offenen Innenraum 23, der im montierten Zustand eine zur Außenwelle 3 hin offene Öffnung aufweist.

Aus den in Figuren 4 und 5 gezeigten Schnitten, die den montierten Zustand von Figur 2 wiedergeben, ist erkennbar, dass sich der Lagerabschnitt 41 außen anliegend über den Verzahnungsabschnitt 21 erstreckt. Die Profilhülse 4 weist erfindungsgemäß einen Befestigungsabschnitt 42 auf, der durch die stirnseitige axiale Öffnung in den Innenraum 23 der Innenwelle 2 eintaucht. Über einen stirnseitigen Verbindungsabschnitt 43 ist der Befestigungsabschnitt 42 mit dem Lagerabschnitt 41 verbunden.

Der Befestigungsabschnitt 42 ist in der gezeigten Ausführung becherförmig ausgebildet, und weist einen Rohrabschnitt 44 und einen Becherboden 45 auf. Der Rohrabschnitt 44 erstreckt sich durch die stirnseitige Öffnung entlang der Innenwandung in den Innenraum 23, wobei der scheibenförmige Becherboden 45 mit Abstand zum Ende im Innenraum 23 liegt. Der Endbereich der den Verzahnungsabschnitt 21 aufweisenden Wandung der in diesem Bereich hohlen Innenwelle 2 befindet sich radial zwischen dem Befestigungsabschnitt 42 und dem Lagerabschnitt 21. Der Befestigungsabschnitt 42 umgreift das Ende der Innenwelle 2.

Der Befestigungsabschnitt 42 weist an seinem Außenumfang radiale Ausnehmungen 46 auf, die als Öffnungen im Rohrabschnitt 44 ausgebildet sein können. Die Innenwelle 2 weist radial nach innen in den Innenraum vorstehende Vorsprünge 24 auf. Die Vorsprünge 24 greifen formschlüssig in die radialen Ausnehmungen 46 ein, so dass eine in axialer Richtung wirksame Formschlussverbindung erzeugt wird, in dem die Vorsprünge 24 formschlüssig in axialer Richtung, also in Richtung der Längsachse L, mit dem Bodenabschnitt 45 zusammenwirkt und mit diesem in Eingriff steht. Bevorzugt sind mehrere - im gezeigten Beispiel vier - Vorsprünge 24 und korrespondierende Ausnehmungen 46 über den Umfang verteilt angeordnet, bevorzugt gleichmäßig über den Umfang verteilt angeordnet. Bevorzugt sind zwei oder drei oder vier Ausnehmungen 46 vorgesehen und Vorsprünge 24 in entsprechend gleicher Anzahl passend zur Anzahl der Ausnehmungen 46.

Die Vorsprünge 24 können als plastische Verstemmungen ausgebildet sein, die in den stirnseitigen Rand des Innenraums 23 kalt eingeformt werden können. Die Ausbildung der Vorsprünge 24 und der Eingriff in die Ausnehmungen 46 ist besonders gut in Figur 5 erkennbar, die einen Schnitt durch in der Schnittebene liegende Formschlussverbindungen zeigt.

Die im Innenraum 23 durch die Vorsprünge 24 und die Ausnehmungen 46 gebildeten Formschlussverbindungen bewirken eine sichere formschlüssige Verbindung der Profilhülse 4 mit der Innenwelle 2. Vorteilhaft ist dabei, dass sich auf der Außenseite der Innenwelle 2 keine Verbindungsmittel befinden, wodurch der Lagerabschnitt 41 relativ länger gestaltet werden kann, und nicht durch die Befestigung beeinträchtigt werden kann.

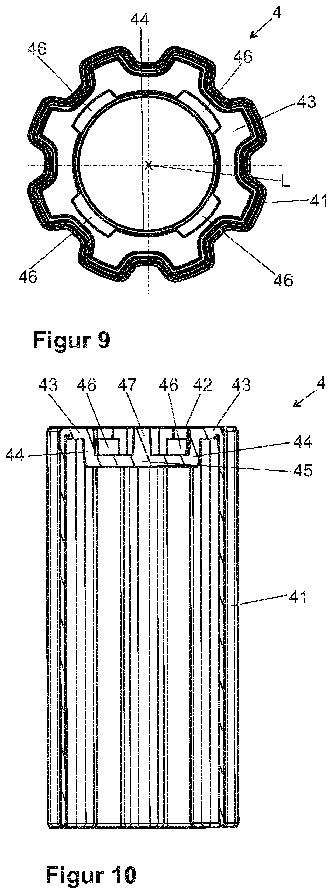

Eine erfindungsgemäße Profilhülse 2 ist separat in einer axialen Ansicht in Figur 9 gezeigt, und im Längsschnitt in Figur 10. Darin sind der becherförmige Befestigungsabschnitt 42 mit dem Rohrabschnitt 44 und den darin als Öffnungen ausgebildeten radialen Ausnehmungen 46 deutlich erkennbar. Die Ausnehmungen 46 können wie gezeigt bevorzugt an dem Becherboden 45 angrenzen. Dadurch können sich im montierten Zustand die Vorsprünge 24 axial gegen den Becherboden 45 abstützen und die formschlüssige Verbindung zwischen Innenwelle 2 und Profilhülse 4 bereitstellen.

Ein Angusszapfen 47 befindet sich zentral an dem Becherboden 45.

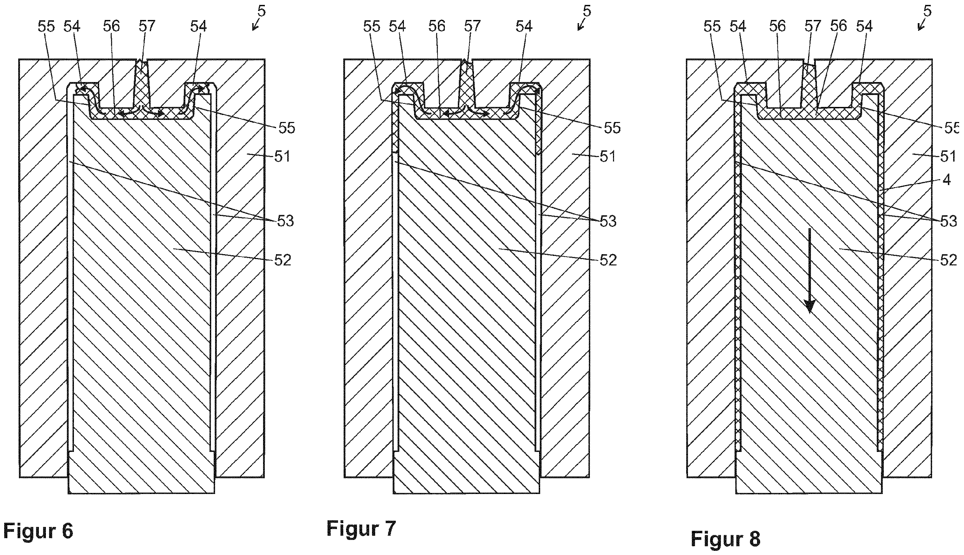

Die Kunststoff-Spritzgussvorgang Fertigung einer Profilhülse 2 nach dem erfindungsgemäßen Verfahren ist schematisch in den Figuren 6, 7 und 8 dargestellt, die eine Spritzgießform 5 schematisch im Schnitt in aufeinander folgenden Füllzuständen zeigen. Zwischen einer Au-ßenform 51 und einem Kern 52 ist ein Formhohlraum gebildet, der einen Hohlprofilraum 53 für den Lagerabschnitt 21 umfasst, der mit einem Verbindungsraum 54 zur Formung des Verbindungsabschnitts 43 verbunden ist. Damit sind stirnseitig Formkanäle 55 verbunden, die den Rohrabschnitt 44 begrenzen. Die Formkanäle 55 gehen von einem Angussraum 56 aus, der innerhalb des Hohlprofilraums 53 liegt und den scheibenförmigen Becherboden 45 begrenzt. In den Angussraum 56 mündet zentral von außen ein Angusskanal 57 ein, durch den schmelzflüssiger Kunststoff in einem zentralen Angusspunkt eingespritzt wird.

Der Kunststoffschmelze ist in Kreuzschraffur dargestellt. Zu Beginn des Spritzvorgangs wird - wie in Figur 6 gezeigt - der Kunststoff über den Angusskanal 57 zentral in den Angussraum 56 eingespritzt, und breitet sich darin in alle Richtungen radial nach außen aus, wie mit den Pfeilen angedeutet. Von dort gelangt die Kunststoffschmelze in die Formkanäle 55, und von dort in den Verbindungsraum 54. Sobald der Verbindungsraum 54 gefüllt ist, bewegt sich die über den Umfang geschlossene Fließfront in axialer Richtung in den Hohlprofilraum 53, wie in Figur 7 dargestellt, bis dieser vollkommen gefüllt ist, wie in Figur 8 dargestellt. Dann kann der Kern 52 in Pfeilrichtung axial aus der Außenform 51 gezogen werden, und nach dem Erstarren der Kunststoffschmelze kann die fertige Profilhülse 4 entnommen werden.

Dadurch, dass der Angussraum 55 einen größeren Durchflussquerschnitt hat als die Formkanäle 54, und der insbesondere größer ist als der Querschnitt des Hohlprofilraum 53, wird die Kunststoffschmelze beim Einspritzen aufgestaut, und es wird sichergestellt, dass sich eine in Umfangsrichtung geschlossene Fließfront bildet, die eine gleichmäßige axiale Befüllung des Hohlprofilraums 53 ohne unerwünschte Bindenähte bewirkt.

### Bezugszeichenliste

- 1: Lenksäule
- 2: Innenwelle
- 21: Anschlussabschnitt
- 22: Verzahnungsabschnitt
- 23: Innenraum
- 24: Vorsprünge
- 24: Vorsprünge
- 3: Außenwelle
- 31: Anschlussabschnitt
- 32: Öffnung
- 4: Profilhülse
- 41: Lagerabschnitt
- 42: Befestigungsabschnitt
- 43: Verbindungsabschnitt
- 44: Rohrabschnitt
- 45: Becherboden
- 46: Ausnehmungen
- 47: Angusszapfen
- 5: Spritzgießform
- 51: Außenform
- 52: Kern
- 53: Hohlprofilraum
- 54: Verbindungsraum
- 55: Formkanäle
- 56: Angussraum
- 57: Angusskanal

- L: Achse (Längsachse)

## Patentansprüche

1. Längenveränderbare Lenkwelle für ein Kraftfahrzeug, umfassend eine hohle Außenwelle (3) mit unrundem Innenquerschnitt, in dem eine Innenwelle (2) drehmomentschlüssig und axial bewegbar aufgenommen ist, wobei zwischen der Innenwelle (2) und der Außenwelle (3) eine Profilhülse (4) angeordnet ist, die einen mit der Innenwelle (2) verbundenen Befestigungsabschnitt (42) aufweist, und die Innenwelle (2) zumindest abschnittweise als Hohlwelle ausgebildet ist, die einen zum in die Außenwelle (3) eintauchenden Ende hin offenen Innenraum (23) aufweist,
**dadurch gekennzeichnet,**
**dass** der Befestigungsabschnitt (42) sich von dem Ende in den Innenraum (23) der Innenwelle (2) hinein erstreckt, und mit einer Innenfläche des Innenraums (23) verbunden ist.

2. Lenkwelle nach Anspruch 1, **dadurch gekennzeichnet, dass** der Befestigungsabschnitt (42) eine radiale Außenfläche hat, die mit einer den Innenraum (23) radial begrenzenden Innenfläche verbunden ist.

3. Lenkwelle nach einem der vorangehenden Ansprüche, **dadurch gekennzeichnet, dass** der Befestigungsabschnitt (42) rohrförmig ausgebildet ist.

4. Lenkwelle nach einem der vorangehenden Ansprüche, **dadurch gekennzeichnet, dass** an der Innenfläche und an dem Befestigungsabschnitt (42) miteinander korrespondierende, miteinander verbindbare Verbindungselemente (24, 46) angeordnet sind.

5. Lenkwelle nach einem der vorangehenden Ansprüche, **dadurch gekennzeichnet, dass** an der Innenwelle (2) mindestens ein von der Innenfläche radial nach innen in den Innenraum (23) vorstehendes Formschlusselement (24) ausgebildet ist, welches in Formschlusseingriff bringbar ist mit einer Formschlussaufnahme (46) des Befestigungsabschnitts (42).

6. Lenkwelle nach Anspruch 5, **dadurch gekennzeichnet, dass** mindestens ein Formschlusselement (24) als Verstemmung eingeformt ist.

7. Lenkwelle nach einem der vorangehenden Ansprüche, **dadurch gekennzeichnet, dass** der Befestigungsabschnitt (42) becherförmig ausgebildet ist, mit einem von der Stirnseite axial beabstandet angeordneten Becherboden (45).

8. Lenkwelle nach einem der vorangehenden Ansprüche, **dadurch gekennzeichnet, dass** die Profilhülse (4) als Kunststoffteil ausgebildet ist.

## Claims

1. Variable-length steering shaft for a motor vehicle, comprising a hollow outer shaft (3) with a non-circular inner cross-section, in which an inner shaft (2) is received in a torque-locking and axially movable manner, a profiled sleeve (4) being arranged between the inner shaft (2) and the outer shaft (3), which profiled sleeve (4) has a fastening section (42) connected to the inner shaft (2), and the inner shaft (2) is designed, at least in section, as a hollow shaft, which is designed at least in sections as a hollow shaft which has an interior (23) which is open towards the end which plunges into the outer shaft (3),
**characterised in**
**in that** the fastening section (42) extends from the end into the inner space (23) of the inner shaft (2) and is connected to an inner surface of the inner space (23).

2. Steering shaft according to claim 1, **characterised in that** the fastening section (42) has a radial outer surface which is connected to an inner surface radially delimiting the inner space (23).

3. Steering shaft according to one of the preceding claims, **characterised in that** the fastening section (42) is tubular.

4. Steering shaft according to one of the preceding claims, **characterised in that** connecting elements (24, 46) which correspond to one another and can be connected to one another are arranged on the inner surface and on the fastening section (42).

5. Steering shaft according to one of the preceding claims, **characterised in that** at least one positive-locking element (24) projecting radially inwards from the inner surface into the interior (23) is formed on the inner shaft (2) and can be brought into positive-locking engagement with a positive-locking receptacle (46) of the fastening section (42).

6. Steering shaft according to claim 5, **characterised in that** at least one positive locking element (24) is formed as a caulking.

7. Steering shaft according to one of the preceding claims, **characterised in that** the fastening section (42) is cup-shaped, with a cup base (45) arranged axially spaced from the end face.

8. Steering shaft according to one of the preceding claims, **characterised in that** the profile sleeve (4) is designed as a plastic part.

## Revendications

1. Arbre de direction à longueur variable pour un véhicule automobile, comprenant un arbre extérieur creux (3) à section transversale intérieure non ronde, dans lequel un arbre intérieur (2) est logé de manière à être mobile axialement et à être lié par un couple de rotation, un manchon profilé (4) étant disposé entre l'arbre intérieur (2) et l'arbre extérieur (3), qui présente une section de fixation (42) reliée à l'arbre intérieur (2), et l'arbre intérieur (2) est conçu au moins par sections comme un arbre creux qui présente un espace intérieur (23) ouvert vers l'extrémité plongeant dans l'arbre extérieur (3),
**caractérisé en ce que**
**en ce que** la section de fixation (42) s'étend depuis l'extrémité dans l'espace intérieur (23) de l'arbre intérieur (2), et est reliée à une surface intérieure de l'espace intérieur (23).

2. Arbre de direction selon la revendication 1, **caractérisé en ce que** la partie de fixation (42) a une surface radialement extérieure qui est reliée à une surface intérieure délimitant radialement l'espace intérieur (23).

3. Arbre de direction selon l'une des revendications précédentes, **caractérisé en ce que** la section de fixation (42) est tubulaire.

4. Arbre de direction selon l'une des revendications précédentes, **caractérisé en ce que** des éléments de liaison (24, 46) correspondant les uns aux autres et pouvant être reliés les uns aux autres sont disposés sur la surface intérieure et sur la section de fixation (42).

5. Arbre de direction selon l'une des revendications précédentes, **caractérisé en ce que** sur l'arbre intérieur (2) est formé au moins un élément à engagement positif (24) faisant saillie de la surface intérieure radialement vers l'intérieur dans l'espace intérieur (23), qui peut être amené en engagement positif avec un logement à engagement positif (46) de la section de fixation (42).

6. Arbre de direction selon la revendication 5, **caractérisé en ce qu'**au moins un élément de fermeture de forme (24) est moulé en tant que matage.

7. Arbre de direction selon l'une des revendications précédentes, **caractérisé en ce que** la section de fixation (42) est réalisée en forme de godet, avec un fond de godet (45) disposé à distance axiale de la face frontale.

8. Arbre de direction selon l'une des revendications précédentes, **caractérisé en ce que** la douille profilée (4) est réalisée sous forme de pièce en matière plastique.
